# EUROPEAN PATENT APPLICATION

(11) **EP 4 794 168 A1**
(43) Date of publication of application: **19.08.2026**
(21) Application number: 26157334.9
(22) Date of filing: 09.02.2026
(51) Int. Cl.: H02J 7/00, F21V 21/002, F21V 21/005, F21V 23/06, H01R 4/64

(54) **ELECTRONIC DEVICE RECHARGEABLE WITHOUT CABLES VIA MAGNETS, STATION FOR THE ELECTRIC CHARGING WITHOUT CABLES VIA MAGNETS FOR SUCH AN ELECTRONIC DEVICE AND SYSTEM FOR ELECTRIC CHARGING WITHOUT CABLES VIA MAGNETS OF ONE OR MORE OF SUCH ELECTRONIC DEVICES SIMULTANEOUSLY**

(30) Priority: 13.02.2025 IT 202500002784
(71) Applicant: Pedrali S.p.A., 24050 Bergamo (IT)
(72) Inventor: PEDRALI, Andrea, I-24050 Mornico al Serio, BERGAMO (IT)
(74) Representative: Mozzi, Matteo

(57) **Abstract**

Electronic device (1) rechargeable without cables via magnets, comprising magnets (M1, M2, M3, M4), for example made of neodymium, configured to perform the dual function of aligning and positioning the electronic device (1) for electric charging, and of effectively transferring electric current from an electric charging station (10) to the rechargeable battery (5) of the electronic device (1).

## Description

### Field of application

The present invention relates to wireless electric charging techniques and, in particular, to an electronic device chargeable without cables (wirelessly), via magnets, to a station or base for electric charging without cables via magnets of such an electronic device, and to a system for electric charging without cables via magnets of one or more of such electronic devices simultaneously.

### Technological background

Systems are known for electric charging without cables (wirelessly) of electronic devices, such as for example smartphones and smartwatches, which provide that the electronic device to be electrically recharged is positioned on a respective electric charging station, connected to an electric power supply network, wherein the correct alignment and positioning is achieved for example via magnets, while the electric charging, without cables, occurs by induction between two coils, one present in the electric charging station and one present in the electronic device to be recharged.

This solution therefore provides the use of magnets for the mutual alignment between the electronic device to be recharged and the electric charging station and of coils to achieve, without the use of cables and by means of induction, the transfer of electric energy from the electric charging station to the rechargeable battery present inside the electronic device to be recharged.

Such a configuration appears nonetheless rather complex as it requires the presence of both magnets and coils in order to achieve the two basic functions for a timely and correct electric charging, namely the alignment and positioning of the electronic device to be recharged on the electric charging station (through the magnets) and the transfer of electric energy (through induction between the coils) .

This complexity evidently results in an increase in manufacturing and possible maintenance costs, considering the time required for the replacement of the magnets and/or the coils.

Nowadays, there is therefore a strong need to have available an electric charging system which provides a configuration of the electronic device to be recharged and also of the electric charging station that is as simplified as possible, so as to ensure contained manufacturing and maintenance costs, while still allowing the possibility of achieving a timely and correct electric charge, namely an easy alignment and positioning of the electronic device to be recharged on the electric charging station and an optimal transfer of electric energy wirelessly (without cables) from the electric charging station to the electronic device to be recharged.

### Summary

The object of the present invention is to provide an electronic device with a rechargeable battery that is capable of overcoming at least partially the drawbacks mentioned above with reference to the prior art, in particular that has a configuration as simplified as possible, so as to ensure both contained manufacturing and maintenance costs and the possibility of achieving a timely and correct electric charge, namely its easy alignment and positioning on the respective electric charging station and an optimal transfer of electric energy without cables from the electric charging station to the electronic device with rechargeable battery to be recharged.

Said object is achieved by means of an electronic device rechargeable without cables via magnets in accordance with claim 1.

Also forming the subject of the present invention are an electric charging station via magnets for such an electronic device and a system for electric charging without cables via magnets of one or more of such electronic devices simultaneously.

The respective dependent claims relate to preferred embodiments of such an electronic device and such an electric charging station.

Further features and advantages of the electronic device according to the invention will become apparent from the description given below of preferred embodiments, provided by way of example and not limitation, with reference to the accompanying figures, in which:
- Figure 1 shows a perspective view of an electronic device rechargeable without cables via magnets according to the present invention;
- Figure 2 shows a bottom perspective view of the electronic device of figure 1;
- Figure 3 shows a side view of the electronic device of figure 1;
- Figure 4 shows a lateral sectional view of the electronic device of figure 1;
- Figure 5 shows a cross-sectional view of the electronic device of figure 1;
- Figure 6 shows a perspective view of a station for electric charging via magnets for the electronic device of figure 1, usable in a system for electric charging without cables via magnets of one or more of such electronic devices simultaneously, in accordance with the present invention;
- Figure 7 shows a side view of the electric charging station of figure 6;
- Figure 8 shows a lateral sectional view of the electric charging station of figure 6;

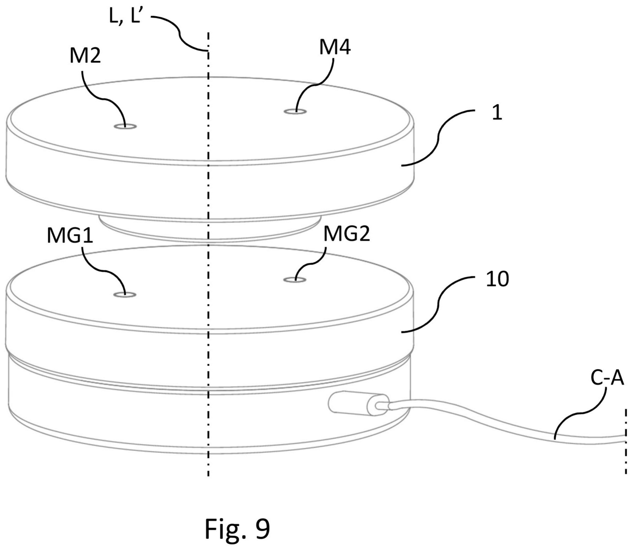

- Figure 9 shows a perspective view of the electronic device of figure 1 and the electric charging station of figure 6, wherein the electronic device and the electric charging station are aligned one above the other but separated from one another;

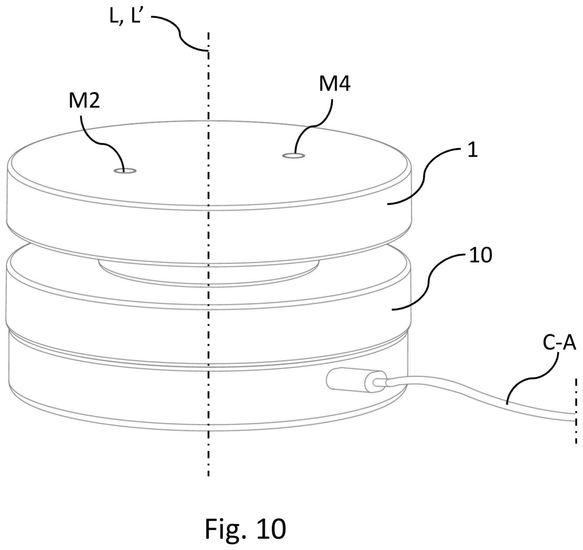

- Figure 10 shows a perspective view of the electronic device and the electric charging station of figure 9 in a configuration wherein the electronic device is aligned and positioned on the electric charging station;

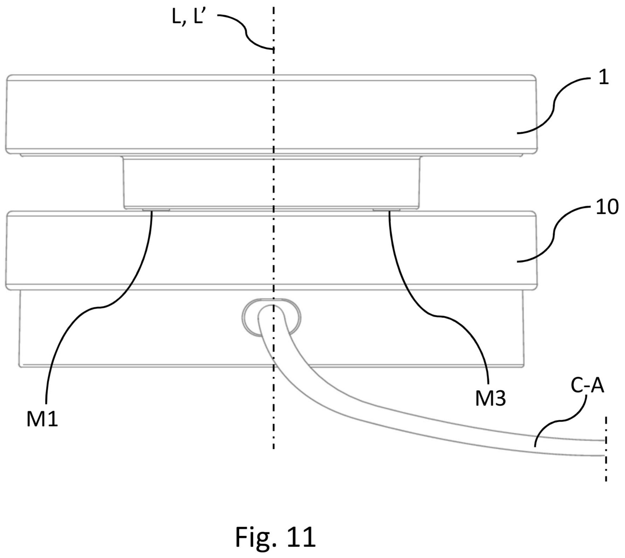

- Figure 11 shows a side view of the configuration of figure 10;

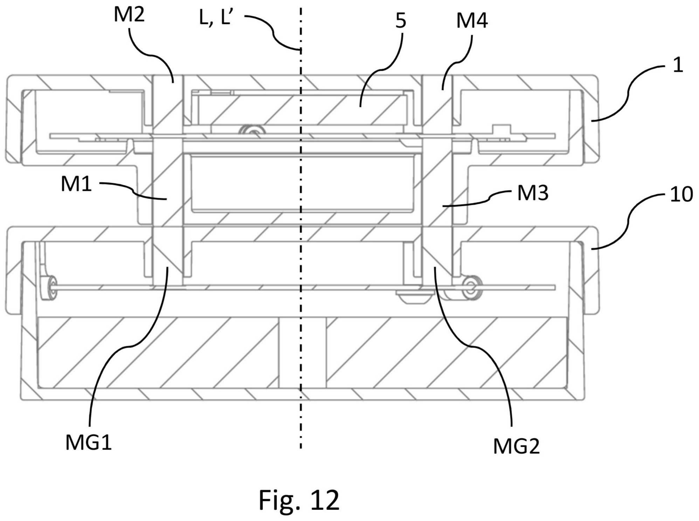

- Figure 12 shows a lateral sectional view of the configuration of figure 10;
- Figure 13 shows a perspective view of a plurality of electronic devices identical to the electronic device of figure 1 and the electric charging station of figure 6, wherein the electronic devices and the electric charging station are aligned one above the other but separated from one another;
- Figure 14 shows a perspective view of the plurality of electronic devices and the electric charging station of figure 13 in a configuration wherein the electronic devices are aligned and positioned one above the other and the lowest electronic device is aligned with and positioned on the electric charging station;
- Figure 15 shows a side view of the configuration of figure 14;
- Figure 16 shows a lateral sectional view of the configuration of figure 14;
- Figure 17 shows a perspective view of an example of application of the electronic device of figure 1 mounted on a support component;
- Figure 18 shows a perspective view of the electronic device and the support component of figure 17, separated from one another;
- Figure 19 shows a bottom perspective view of the example of application of figure 17;
- Figure 20 shows a side view of the example of application of figure 17; and
- Figure 21a shows a lateral sectional view of the example of application of figure 17; and
- Figure 21b shows an enlargement of figure 21a.

It is noted that in the figures identical or similar elements will be denoted by the same numerical and/or alphanumerical references.

### Detailed description

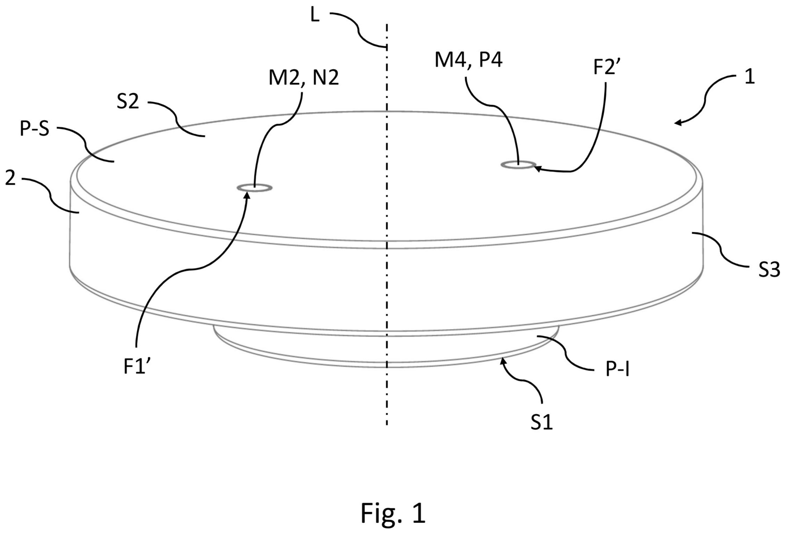

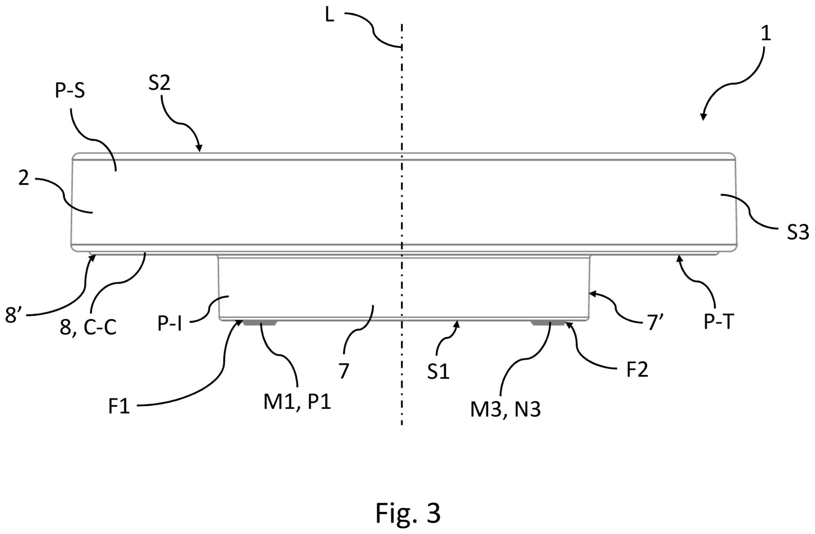

With reference to the aforementioned figures and in particular to figures 1-5, an electronic device 1 rechargeable without cables (wirelessly) via magnets is now described, hereinafter also referred to as rechargeable electronic device or simply electronic device, in accordance with the present invention.

The term "without cables via magnets" is intended to mean a mode of electric charging that operates without the use of cables (wirelessly), namely that the electronic device 1 is rechargeable without the use of specific electric cables for connection to an electric power supply network, but via magnets.

The electronic device 1 comprises a main body 2 extending longitudinally along a longitudinal extension axis L (schematically shown in the figures with a dashed line).

The main body 2 is delimited by a first lower wall S1 and by a second upper wall S2 joined together by at least one side wall S3.

The first lower wall S1 and the second upper wall S2 are preferably parallel to each other and orthogonal with respect to the longitudinal extension axis L of the main body 2.

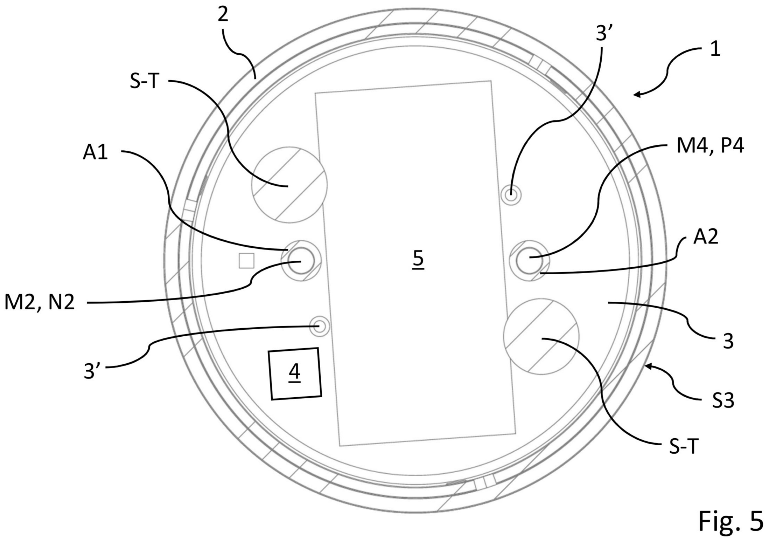

The electronic device 1 further comprises an electronic board 3 housed inside said main body 2 (see in particular figure 5).

The electronic board 3 is, for example, a printed circuit board (PCB).

In this regard, the main body 2 is preferably provided with supports 3' to which the electronic board 3 is fixed.

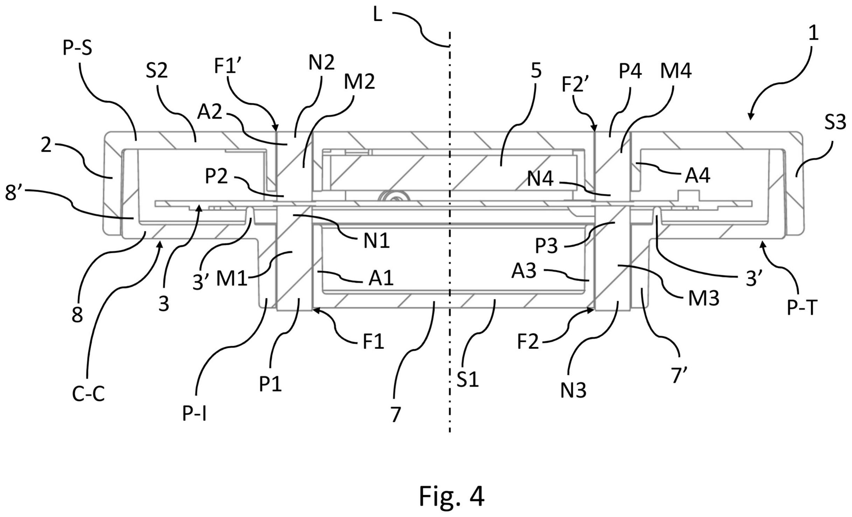

For example, as shown in figure 4, the supports 3' extend inwardly of the main body 2 starting from the first lower wall S1.

The electronic device 1 further comprises at least one programmable data processing unit 4, for example a microcontroller or microprocessor, mounted on said electronic board 3.

It is noted that the programmable data processing unit 4 is configured to load and execute program codes previously stored in a memory unit internal or external to the programmable data processing unit 4, for the control, in general, of the electronic device 1 and in particular to perform the functions assigned to the electronic device 1 during its normal operation.

In this regard, examples of rechargeable electronic device 1 are: light diffusers for lamps (an embodiment of which will be described below), pagers, power banks, audio guides, recessed spotlights, drones, and so on.

Returning to the present invention, the electronic device 1 comprises a rechargeable battery 5, for example a lithium battery, housed inside said main body 2 and operatively connected to said electronic board 3.

The electronic device 1 further comprises a first magnet M1 housed inside said main body 2 and operatively connected to the electronic board 3.

The first magnet M1 has a respective positive pole P1 facing outwardly of the main body 2 through a first through hole F1 present on the first lower wall S1 of the main body 2 and a respective negative pole N1 facing inwardly of the main body 2 and operatively connected to the electronic board 3.

The negative pole N1 of the first magnet M1 is in contact with the electronic board 3.

The electronic device 1 further comprises a second magnet M2 housed inside said main body 2 and operatively connected to the electronic board 3.

The second magnet M2 has a respective negative pole N2 facing outwardly of the main body 2 through a first through hole F1' present on the second upper wall S2 of the main body 2 and a respective positive pole P2 facing inwardly of the main body 2 and operatively connected to the electronic board 3.

The positive pole P2 of the second magnet M2 is in contact with the electronic board 3.

The first magnet M1 and the second magnet M2 are housed inside the main body 2 so as to be mutually aligned along a same axis parallel to the longitudinal extension axis L of the main body 2 and the negative pole N1 of the first magnet M1 faces the positive pole P2 of the second magnet M2.

Preferably, the negative pole N1 of the first magnet M1 is in contact with the positive pole P2 of the second magnet M2.

It is noted that the first through hole F1 present on the first lower wall S1 of the main body 2 and the first through hole F1' present on the second upper wall S2 of the main body 2 represent, respectively, the opening of a first through housing A1 made in the main body 2 and within which the first magnet M1 is inserted and the opening of a second through housing A2 made in the main body 2 and within which the second magnet M2 is inserted.

In this respect, the first through hole F1 present on the first lower wall S1 of the main body 2 is preferably aligned with the first through hole F1' present on the second upper wall S2 of the main body 2, parallel to the longitudinal extension axis L of the main body 2.

In other words, as shown in the figures, the first through housing A1 and the second through housing A2 are substantially parallel to the longitudinal extension axis L of the main body 2 so that the first magnet M1 and the second magnet M2 housed inside the main body 2 are adapted to form a first stack of magnets extending substantially parallel to the longitudinal extension axis L of the main body 2.

Returning to the invention, the electronic device 1 comprises a third magnet M3 housed inside said main body 2 and operatively connected to the electronic board 3.

The third magnet M3 has a respective negative pole N3 facing outwardly of the main body 2 through a second through hole F2 present on the first lower wall S1 of the main body 2 and a respective positive pole P3 facing inwardly of the main body 2 and operatively connected to the electronic board 3.

The positive pole P3 of the third magnet M3 is in contact with the electronic board 3.

The electronic device 1 further comprises a fourth magnet M4 housed inside said main body 2 and operatively connected to the electronic board 3.

The fourth magnet M4 has a positive pole P4 facing outwardly of the main body 2 through a second through hole F2' present on the second upper surface S2 of the main body 2 and a negative pole N4 facing inwardly of the main body 2 and operatively connected to the electronic board 3.

Preferably the negative pole N4 of the fourth magnet M4 is in contact with the electronic board 3.

The third magnet M3 and the fourth magnet M4 are housed inside the main body 2 so as to be mutually aligned along a same axis parallel to the longitudinal extension axis L of the main body 2 and the positive pole P3 of the third magnet M3 faces the negative pole N4 of the fourth magnet M4.

Preferably, the positive pole P3 of the third magnet M3 is in contact with the negative pole N4 of the fourth magnet M4.

It is noted that the second through hole F2 present on the first lower wall S1 of the main body 2 and the second through hole F2' present on the second upper wall S2 of the main body 2 represent, respectively, the opening of a third housing A3 made in the main body 2 and within which the third magnet M3 is inserted and the opening of a fourth housing A4 made in the main body 3 and within which the fourth magnet M4 is inserted.

In this respect, the second through hole F2 present on the first lower wall S1 of the main body 2 is preferably aligned with the second through hole F2' present on the second upper wall S2 of the main body 2, parallel to the longitudinal extension axis L of the main body 2.

In other words, as shown in the figures, the third housing A3 and the fourth housing A4 are substantially parallel to the longitudinal extension axis L of the main body 2 so that the third magnet M3 and the fourth magnet M4 housed inside the main body 2 are adapted to form a second stack of magnets extending substantially parallel to the longitudinal extension axis L of the main body 2.

Furthermore, it is noted that the first stack of magnets (first magnet M1 and second magnet M2) is housed inside the main body 2 so as to have the respective poles inverted with respect to the second stack of magnets (third magnet M3 and fourth magnet M4).

In accordance with the present invention, the positive pole P1 of the first magnet M1 and the negative pole N3 of the third magnet M3 facing outwardly of the main body 2 from the first lower wall S1 are adapted to contact, respectively, a respective negative pole of a further first magnet and a respective positive pole of a further second magnet to allow the rechargeable electronic device 1 to be positioned for the electric charging of the rechargeable battery 5.

Furthermore, still in accordance with the present invention, the first magnet M1 and the third magnet M3, when the rechargeable electronic device 1 is positioned for the electric charging of the rechargeable battery 5, are advantageously adapted to receive, from the further first and second magnets on which they are positioned, electric current from an electric charging station 10, described below, connected to an electric power supply network, to electrically charge the rechargeable battery 5.

The transfer of electric current through the magnets in contact with one another can be achieved by exploiting the electric conductivity of the magnets.

Indeed, the stack of magnets M1 and M2 represents the negative pole of the circuit, while that of M3 and M4 constitutes the positive pole, thus determining the flow of electric current.

As will be described below, the further first magnet and the further second magnet may be included in an electric charging station via magnets on which the electronic device 1 can be directly positioned for the electric charging of the rechargeable battery 5.

The term "electric charging via magnets" is intended to mean a mode of electric charging wherein the transfer of electric current from the electric charging station occurs via magnets, without the use of cables, namely that the electric charging station is adapted to supply electric current to the rechargeable electronic device 1 without the use of specific electric cables for connection between the electric charging station and the rechargeable electronic device 1 but, precisely, via magnets.

In this case, the electronic device 1 directly receives from the electric charging station, via magnets, the electric current to recharge the rechargeable battery 5.

Alternatively, the further first magnet and the further second magnet may be included, respectively, in a first stack of magnets and a second stack of magnets of a further rechargeable electronic device, identical to the electronic device 1, in turn positionable, in the same manner (i.e. through a respective first stack of magnets and a second stack of magnets), on an electric charging station.

In this second alternative, the electronic device 1 receives the electric current supplied by the electric charging station through the further rechargeable electronic device 1.

The use of magnets in the rechargeable electronic device 1 advantageously allows both alignment and positioning (direct or indirect) on the electric charging station or on one or more further rechargeable electronic devices identical to the rechargeable electronic device 1, as will also be reiterated below, and the transfer of electric current from the electric charging station to the rechargeable battery 5 of the rechargeable electronic device 1.

Therefore, the rechargeable electronic device 1 offers the advantage of being easily alignable and positionable (directly or indirectly) on the respective electric charging station and of ensuring optimal electric energy transfer, via magnets, from the electric charging station to the electronic device with rechargeable battery to be recharged.

The absence of cables for the electric charging of the electronic device also results in a considerable simplification from a hardware point of view of both the electric charging station and the electronic device.

Moreover, an improvement in energy efficiency is also evident, mainly resulting from the reduction in cables required for charging.

In accordance with one embodiment, the negative pole N2 of the second magnet M2 and the positive pole P4 of the fourth magnet M4 are adapted to contact, respectively, a respective positive pole of a further first magnet and a respective negative pole of a further third magnet of a further rechargeable electronic device positionable above the electronic device 1 for the electric charging of a further rechargeable battery of said further rechargeable electronic device.

In this embodiment, the second magnet M2 and the fourth magnet M4, when the rechargeable electronic device 1 is positioned for the electric charging of the rechargeable battery and the further rechargeable electronic device is positioned above the rechargeable electronic device 1, are adapted to transfer, to the further first magnet and to the further second magnet of the further rechargeable electronic device, respectively, the electric current received respectively from the first magnet M1 and the third magnet M3, coming from the electric charging station 10 connected to the electric power supply network.

Indeed, the electric current supplied to the first magnet M1 and the third magnet M3, by electric conductivity between magnets in contact with one another, is also supplied to the second magnet M2, via the first magnet M1, and to the fourth magnet M4, via the third magnet M3.

It is reiterated in this regard that the stack of magnets M1 and M2 represents the negative pole of the circuit, while that of M3 and M4 constitutes the positive pole, thereby determining the passage of electric current.

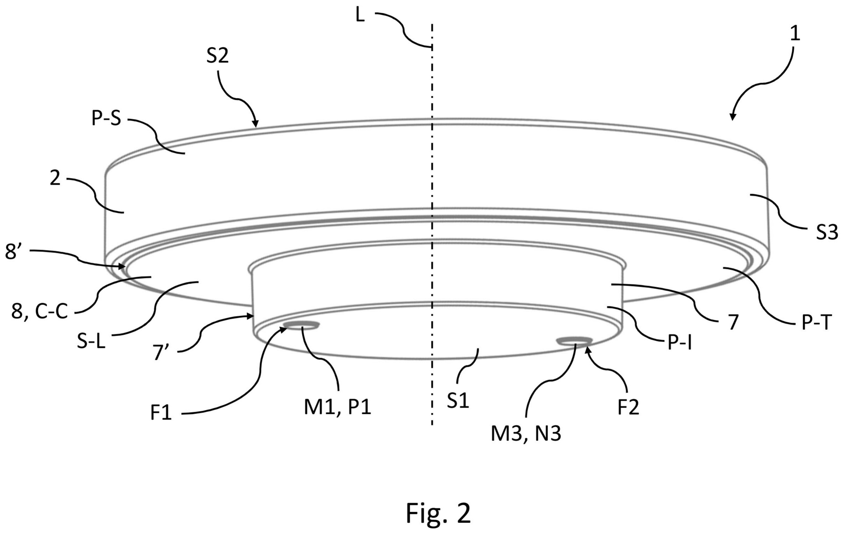

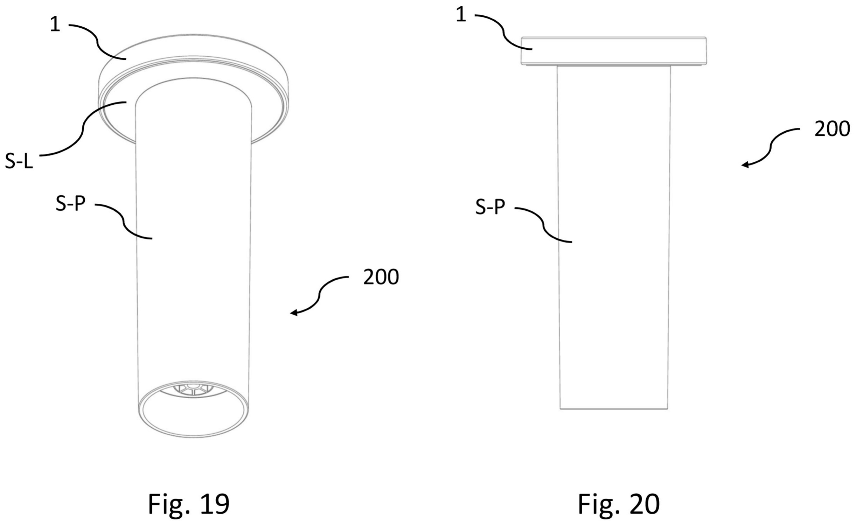

In accordance with one embodiment, in combination with any of the foregoing, the electronic device 1 comprises a light source S-L, shown for example in figures 2 and 19, operatively connected to the electronic board 3.

For example, said light source S-L comprises a series of light-emitting diodes (LEDs) fixed on the electronic board 3 and electrically connected thereto.

In this embodiment, the electronic device 1 comprises one or more controls S-T operable by a user and operatively connected to the electronic board 3 for controlling the light source S-L.

Said one or more controls S-T are, for example, distributed inside the main body 2 so as to be accessible by the user through interaction with the second upper wall S2.

Indeed, for example, said one or more user-operable controls S-T are touch-type sensors (touchscreen) preferably positioned below the second upper wall S2 of the main body 2 so that a pressure by the user on the second upper wall S2 of the main body 2 is suitable for activating said one or more controls S-T.

In this regard, the data processing unit 4 is configured to control the light source S-L based on the commands received through said one or more controls S-T.

Examples of control of the light source S-L, obtainable by the activation of said one or more controls S-T, are: switching on, switching off, increasing light intensity, decreasing light intensity, changing the colour of the light, changing the colour temperature of the light, and so on.

In accordance with one embodiment, in combination with the foregoing, the main body 2 of the electronic device 1 comprises a transparent or semi-transparent portion P-T adapted to promote the passage of the light generated by the light source S-L to the outside.

For example, said transparent or semi-transparent portion P-T is made of opaline plastic material which produces a diffusing effect of the light generated by the light source S-L.

Preferably, said transparent or semi-transparent portion P-T is made of polycarbonate.

In accordance with one embodiment, in combination with the foregoing, the main body 2 comprises an upper portion P-S and a lower portion P-I fixed to each other, for example by bayonet coupling.

In greater detail, the upper portion P-S comprises the second upper wall S2 and the at least one side wall S3.

The lower portion P-I comprises the first lower wall S1 and the transparent or semi-transparent portion P-T.

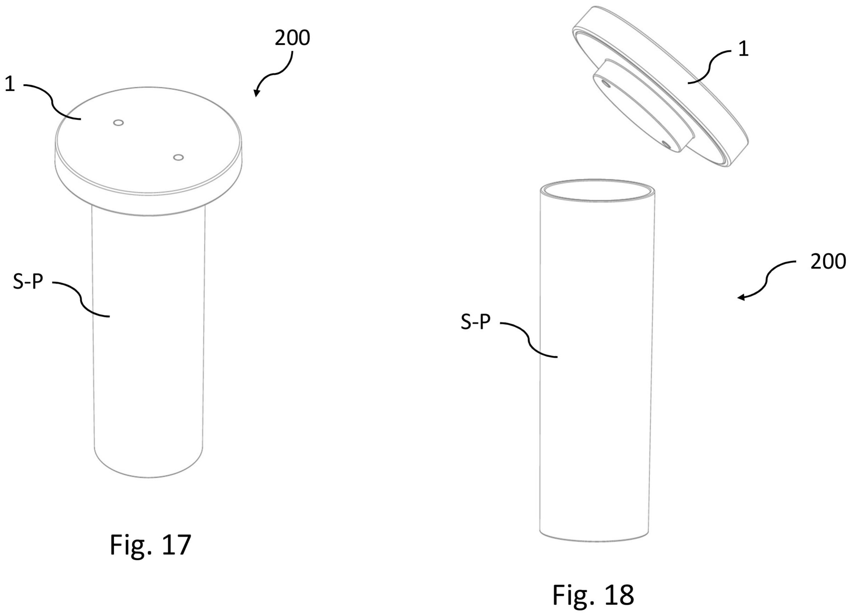

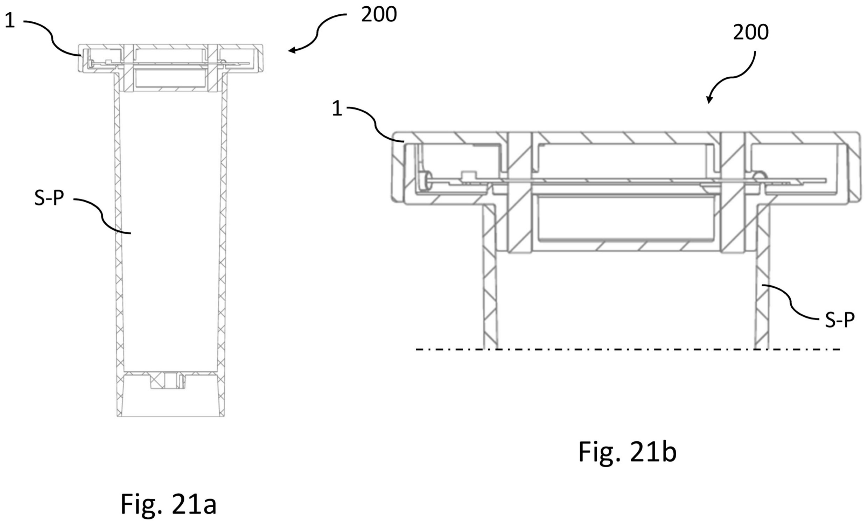

In accordance with one embodiment, in combination with the foregoing, the lower portion P-I of the main body 2 is shaped so as to be removably fixable to a support S-P (figures 17-21a and 21b), for example a lamp stem.

Indeed, the rechargeable electronic device 1, when provided with the light source S-L, is advantageously fixable to the support S-P to effectively form a table lamp, such as that shown in figures 17, 19, 20, and 21a.

In one embodiment, shown in the figures, the support S-P is cylindrical in shape, hollow at least in the upper part, to receive and retain the lower portion P-I of the main body 2 of the electronic device 1.

In one embodiment, in combination with the foregoing, the upper portion P-S is in the form of a hollow cylinder delimited at the top by the second upper wall S2 and laterally by the at least one side wall S3.

In this embodiment, the lower portion P-I is cylindrical in shape.

In greater detail, the lower portion P-I of the main body 2 in turn comprises a lower cylindrical portion 7 delimited by the first lower wall S1 and by an additional first side wall 7', extending parallel to the longitudinal extension axis L of the cylindrical body 2, and an upper cylindrical portion 8, with a radius greater than the radius of the lower cylindrical portion 7, delimited by a circular crown C-C joined, at the smaller circle, to the additional first side wall 7' of the lower cylindrical portion 7 and, at the larger circle, joined to an additional second side wall 8', extending parallel to the longitudinal extension axis L of the cylindrical body 2.

The circular crown C-C of the upper cylindrical portion 8 extends on a plane orthogonal to the longitudinal extension axis L of the main body 2.

The additional second side wall 8' of the upper cylindrical portion 8 is sized to engage by interlocking with the at least one side wall S3 of the upper portion P-S of the main body, inside the space delimited by the at least one side wall S3.

The additional first side wall 7' of the lower cylindrical portion 7 is sized to engage by interlocking inside the cavity present at least in the upper part of the support S-P (see, for example, the enlargement shown in figure 21b).

In accordance with one embodiment, in combination with the foregoing and any of the preceding ones in which the transparent or semi-transparent portion P-T is provided, the transparent or semi-transparent portion P-T of the main body 2 corresponds to at least a part (for example, the circular crown C-C) of the upper cylindrical portion 8 of the upper portion P-S of the main body 2.

In accordance with one embodiment, in combination with the foregoing, the transparent or semi-transparent portion P-T of the main body 2 corresponds to the upper cylindrical portion 8 of the upper portion P-S of the main body 2.

In accordance with one embodiment, in combination with any of the foregoing, the first magnet M1, the second magnet M2, the third magnet M3, and the fourth magnet M4 are neodymium magnets.

Neodymium magnets advantageously offer high magnetic strength, which allows, on the one hand, an effective attraction that ensures stable alignment and positioning of the electronic device 1 for the electric charging of the rechargeable battery 5, and on the other hand, a good electric current transfer.

It is noted that although neodymium magnets are ideal for this type of application, it is possible to use magnets made of other materials, such as, for example, ferrite magnets, aluminium-nickel-cobalt (Alnico), samarium-cobalt, albeit potentially with lower magnetic strength.

In accordance with one embodiment, not shown in the figures, the electronic device 1, as an alternative to comprising the first stack of magnets formed by the first magnet M1 and the second magnet M2 and the second stack of magnets formed by the third magnet M3 and the fourth magnet M4, may comprise:
- as an alternative to the first row of magnets formed by the first magnet M1 and the second magnet M2, a single first magnet, housed inside said main body 2 and operatively connected to the electronic board 3, having a positive pole facing outwardly of the main body 2 through the first through hole F1 present on the first lower wall S1 of the main body 2 and having a respective negative pole facing outwardly of the main body 2 through a first through hole F1' present on the second upper wall S2 of the main body 2;
- as an alternative to the second row of magnets formed by the third magnet M3 and the fourth magnet M4, a single second magnet, housed inside said main body 2 and operatively connected to the electronic board 3, having a respective negative pole facing outwardly of the main body 2 through the second through hole F2 present on the first lower wall S1 of the main body 2 and having a respective positive pole facing outwardly of the main body 2 through the second through hole F2' present on the second upper surface S2 of the main body 2.

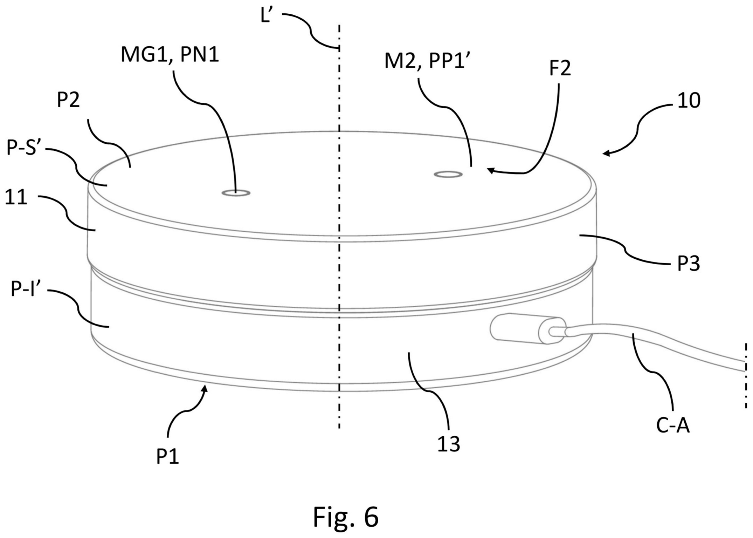

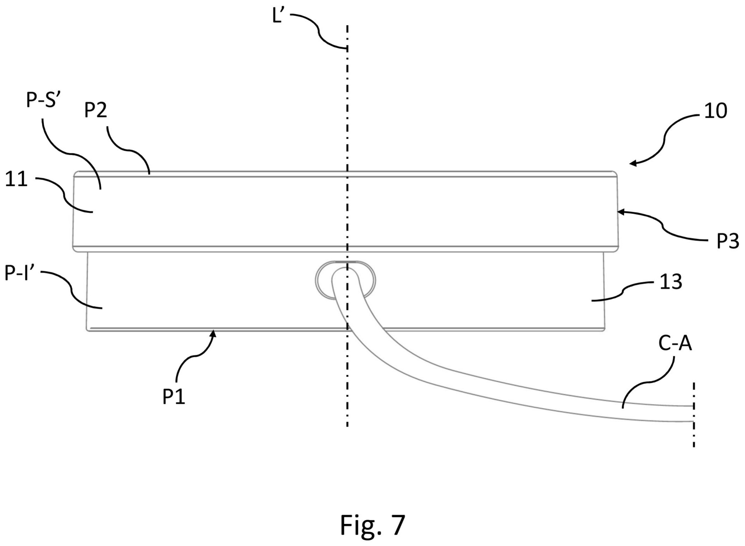

With reference now in particular to figures 6-8, a station or base for electric charging without cables, via magnets, a rechargeable electronic device 1 is now described, in accordance with the present invention.

The rechargeable electronic device 1 is in accordance with any of the embodiments described above.

It is reiterated that the term "electric charging without cables" is intended to mean a mode of electric charging that operates without the use of cables, namely that the electric charging station is adapted to supply electric current to the rechargeable electronic device 1 without the use of specific electric cables for connection between the electric charging station and the rechargeable electronic device 1.

The station for electric charging without cables, hereinafter also simply referred to as electric charging station or just station, is denoted overall by reference number 10.

The station 10 comprises a respective main body 11 extending longitudinally along a respective longitudinal extension axis L' (schematically represented in the figures by a dashed line).

The main body 11, preferably circular, of the station 10 is delimited by a first lower wall P1 and a second upper wall P2 joined together by at least one side wall P3.

The first lower wall P1 and the second upper wall P2 are preferably parallel to each other and orthogonal with respect to the longitudinal extension axis L' of the main body 11 of the station 10.

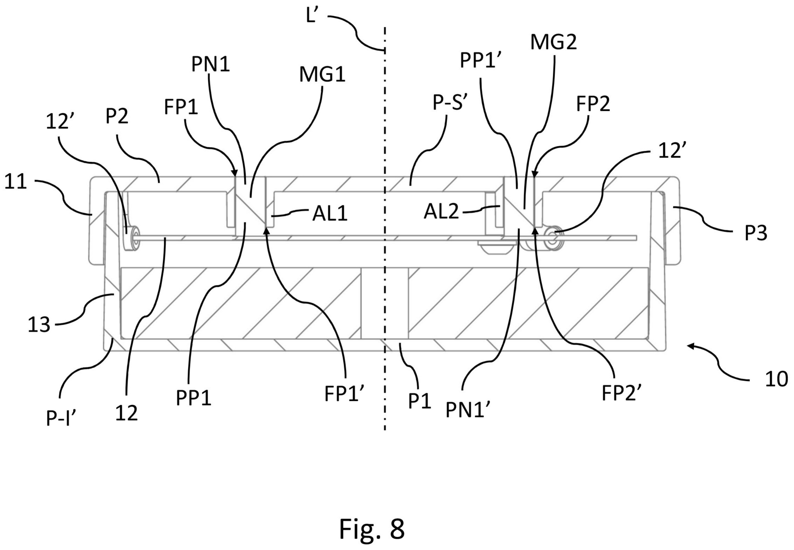

The station 10 further comprises a respective electronic board 12 housed inside said main body 11 of the station 10 (see for example figure 8).

The main body 11 of the station 10 is preferably provided with supports 12' to which the electronic board 12 is fixed.

For example, as shown in figure 8, the supports 12' extend inwardly from the first lower wall P1 of the main body 11.

The station 10 further comprises a first magnet MG1 housed inside said main body 11 and operatively connected to the electronic board 12.

The first magnet MG1 of the station 10 has a respective negative pole PN1 facing outwardly of the main body 11 through a first through hole FP1 present on the second upper wall P2 of the main body 11 and a respective positive pole PP1 facing inwardly of the main body 11 through a first through hole FP1' present inside the main body 11 and connected to the electronic board 12 (as shown in figure 8).

It is noted that the first through hole FP1 present on the second upper wall P2 of the main body 11 and the first through hole FP1' present inside the main body 11 represent, respectively, the openings of a first through housing AL1 made in the main body 11 and within which the first magnet MG1 is inserted.

In this regard, the first through hole FP1 present on the second upper wall P2 of the main body 11 is preferably aligned with the first through hole FP1' present inside the main body 11, parallel to the longitudinal extension axis L' of the main body 11 of the station 10.

In other words, as shown in the figures, the first housing AL1 is substantially parallel to the longitudinal extension axis L' of the main body 11 of the station 10 so that the first magnet MG1 housed inside the main body 11 is also substantially parallel to the longitudinal extension axis L' of the main body 11 of the station 10.

The station 10 comprises a second magnet MG2 housed inside said main body 11 and operatively connected to the electronic board 12.

The second magnet MG2 has a respective positive pole PP1' facing outwardly of the main body 11 through a second through hole FP2 present on the second upper wall P2 of the main body 11 and a respective negative pole PN1' facing inwardly of the main body 11 through a second through hole FP2' present inside the main body 11 and connected to the electronic board 12 (as shown in figure 8).

It is noted that the second through hole FP2 present on the second upper wall P2 of the main body 11 and the second through hole FP2' present inside the main body 11 of the station 10 represent, respectively, the openings of a second housing AL2 made in the main body 11 of the station 10 and within which the second magnet MG2 is inserted.

In this regard, the second through hole FP2 present on the second upper wall P2 of the main body 2 is preferably aligned with the second through hole FP2' present inside the main body 11, parallel to the longitudinal extension axis L' of the main body 11 of the station 10.

In other words, as shown in the figures, the second housing AL2 is substantially parallel to the longitudinal extension axis L' of the main body 11 of the station 10 so that the second magnet MG2 housed inside the main body 11 of the station 10 is also substantially parallel to the longitudinal extension axis L' of the main body 11 of the station 10.

Furthermore, it is noted that the second magnet MG2 is preferably housed inside the main body 11 of the station 10 so as to have its poles inverted with respect to the poles of the first magnet MG1.

The station 10 further comprises an electric power supply cable C-A which, at a first end, comprises electric cables connected, directly or for example through the electronic board 12, to the first magnet MG1 and to the second magnet MG2, and, at a second end, comprises an electric plug (not shown in the figures) for connecting the station 10 to an electric power supply network (also not shown in the figures) and supplying electric current, via a transformer inside the station 10, directly or through the electronic board 12, to the first magnet MG1 and to the second magnet MG2 of the station 10.

In accordance with the present invention, the negative pole PN1 of the first magnet MG1 and the positive pole PP1' of the second magnet MG2 facing outwardly of the main body 11 of the station 10 from the second upper wall P2 are adapted to contact, respectively, a respective positive pole P1 of the first magnet M1 and a respective negative pole N3 of the third magnet M3 of the rechargeable electronic device 1 to allow the rechargeable electronic device 1 to be positioned on the wireless (without cables) electric charging station 10 for the electric charging of a rechargeable battery 5 of the rechargeable electronic device 1.

Furthermore, in accordance with the present invention, the first magnet MG1 and the second magnet MG2 of the station 10, when the rechargeable electronic device 1 is positioned on the station 10 for the electric charging of the rechargeable battery 5, are advantageously adapted to supply, to the first magnet M1 and to the third magnet M3 of the electronic device 1, the electric current supplied by the electric charging station 10 connected to the electric power supply network to electrically charge the rechargeable battery 5 of the electronic device 1.

Furthermore, the electric current supplied to the first magnet M1 and to the third magnet M3, by electric conductivity between magnets in contact with each other, is also supplied to the second magnet M2, via the first magnet M1, and to the fourth magnet M4, via the third magnet M3.

In accordance with one embodiment, the main body 11 of the station 10 comprises an upper portion P-S' and a lower portion P-I' fixed to each other, for example by bayonet coupling.

In greater detail, the upper portion P-S' comprises the second upper wall P2 and the at least one side wall P3.

The lower portion P-I' comprises the first lower wall P1.

In one embodiment, in combination with the foregoing, the upper portion P-S' has the shape of a hollow cylinder delimited at the top by the second upper wall P2 and laterally by the at least one side wall P3.

In this embodiment, the lower portion P-I' of the main body 11 of the station 10 has the shape of a hollow cylinder delimited by the first lower wall P1 and by an additional first side wall 13, extending parallel to the longitudinal extension axis L' of the cylindrical body 11.

The additional first side wall 13 of the lower portion P-I' of the main body 11 is sized so as to engage by interlocking with the at least one side wall P3 of the upper portion P-S' of the main body 11, within the space delimited by the at least one side wall P3.

In accordance with one embodiment, in combination with any of the foregoing, the first magnet MG1 and the second magnet MG2 are neodymium magnets.

As mentioned also above, neodymium magnets advantageously offer high magnetic strength, which allows, on the one hand, an effective attraction that ensures stable alignment and positioning of a rechargeable electronic device 1 on the station 10 for the electric charging of a rechargeable battery 5 of the electronic device 1, and on the other hand, a good transfer of electric current.

It is noted that although neodymium magnets are ideal for this type of application, it is possible to use magnets made of other materials, albeit potentially with lower magnetic strength.

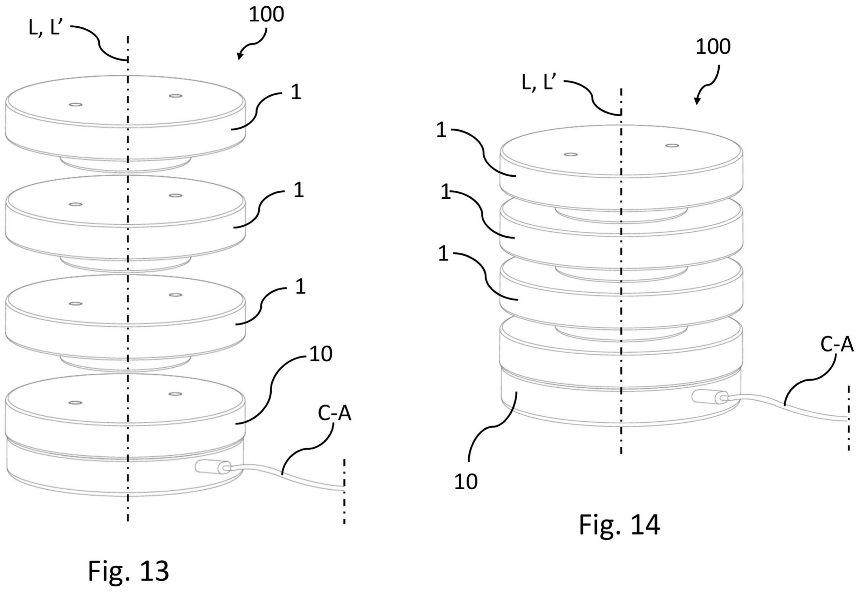

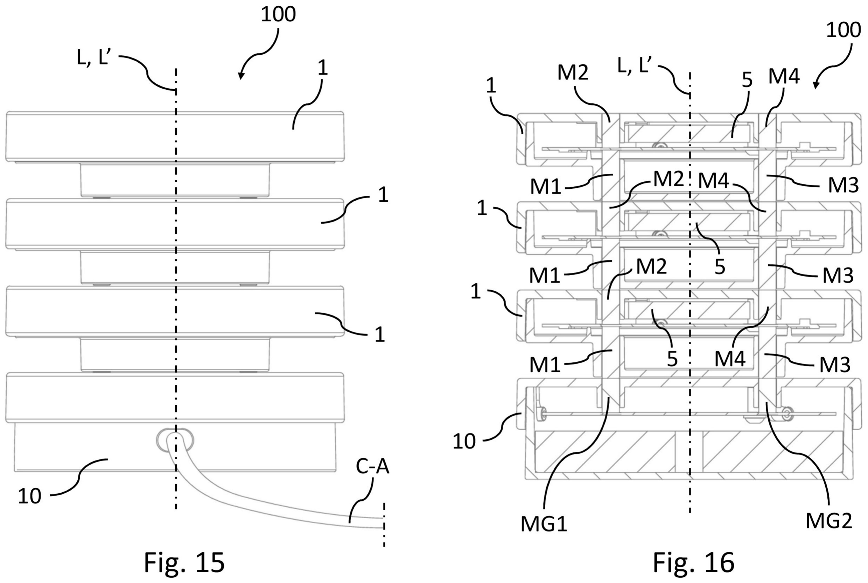

With particular reference to figures 13-16, the present invention also relates to a system 100 for electric charging without cables (wirelessly) via magnets one or more rechargeable electronic devices 1 simultaneously.

Said system 100 comprises an electric charging station 10 via magnets in accordance with any of the embodiments described above.

Said system 100 comprises one or more electronic devices 1, each in accordance with the embodiments described above.

Said one or more electronic devices 1 are alignable and positionable one above the other, along the longitudinal extension axis L, starting from the electric charging station 10 by means of the magnetic coupling obtainable between the first magnet MG1 of the charging station 10, the first magnet M1 and the second magnet M2 of said one or more electronic devices 1, and by means of the magnetic coupling between the second magnet MG2 of the electric charging station 10, the third magnet M3 and the fourth magnet M4 of said one or more electronic devices 1.

The electronic device 1 positionable in contact with the electric charging station 10 is adapted to receive electric current directly from the station 10, connected to an electric power supply network, via the respective first magnet MG1 of the charging station 10, the first magnet M1 and the second magnet M2 of said electronic device 1 (first stack of magnets), and via the second magnet MG2 of the electric charging station 10, the third magnet M3 and the fourth magnet M4 of said electronic device 1 (second stack of magnets), in magnetic contact (positive pole with negative pole and vice versa) with one another to form respective electric conductors between the station 10 and the rechargeable battery 5 of said electronic device 1.

Each of the other electronic devices 1, each positioned in contact with the electronic device 1 that precedes it in the vertical stack buildable from the station 10, is adapted to receive electric current from the station 10 by means of the electric conductors represented by the respective first magnet MG1 of the electric charging station 10, first magnet M1 and second magnet M2 of the electronic devices 1 (first stack of magnets), and through the second magnet MG2 of the electric charging station 10, the third magnet M3 and the fourth magnet M4 of the electronic devices 1 (second stack of magnets) in magnetic contact (positive pole with negative pole and vice versa) of the station 10 and all the electronic devices 1 that precede it in the vertical stack obtainable starting from the station 10.

It is noted that the transfer of electric current via said electric conductors can be achieved by exploiting the electric conductivity of the magnets in contact with one another.

Indeed, it is reiterated that the stack of magnets M1 and M2 represents the negative pole of the circuit, while that of M3 and M4 constitutes the positive pole, thus determining the flow of electric current.

Therefore, in this configuration, each electronic device 1 of said one or more electronic devices, when positioned for electric charging, is adapted to receive electric current to electrically charge the respective rechargeable battery 5.

Therefore, the system 100 advantageously allows to significantly optimise the space required to charge wirelessly, via magnets, the rechargeable batteries of multiple electronic devices, for example light diffusers of portable table lamps, ensuring more efficient and compact management, ideal for high-traffic environments such as restaurants, bars or hotels.

For example, in the same space occupied by five traditional electric charging stations, which charge about thirty side-by-side light diffusers, the system 100 of the invention making it possible to stack light diffusers and simultaneously charge over five hundred of them.

With further reference to figures 17-20, 21a and 21b, the present invention also relates to a lamp 200, preferably a table lamp.

The lamp 200 comprises an electronic device 1 in accordance with any of the embodiments in which a light source S-L is provided inside the electronic device 1.

The lamp 200 further comprises a support S-P of said electronic device 1.

In one embodiment, shown in figures 17-20, 21a and 21b, the support S-P is in the shape of a cylinder, hollow at least in the upper part, to receive and retain a lower portion P-I of a main body 2 of the electronic device 1.

With reference to the aforementioned figures, an example of operation of the system 100 is now described, in accordance with one embodiment.

The electric charging station 10 is connected to the electric power supply network.

A without cables (wireless) rechargeable electronic device 1 via magnets, for example a light diffuser, is aligned with and positioned on the station 10 by magnetic coupling between the negative pole PN1 of the first magnet MG1 of the station 10 and the positive pole P1 of the first magnet M1 of the electronic device 1 and the coupling between the positive pole PP1' of the second magnet MG2 of the station 10 and the negative pole N3 of the third magnet M2 of the electronic device 1.

One or more further without cables (wireless) rechargeable electronic devices 1 via magnets, i.e., other light diffusers, are aligned with and positioned on the electronic device previously aligned and positioned, starting from the electronic device 1 positioned on the station 10, by magnetically coupling the positive pole of the first magnet of the electronic device 1 to be positioned with the negative pole of the second magnet of the electronic device already positioned, and by magnetically coupling the negative pole of the third magnet of the electronic device 1 to be positioned with the positive pole of the fourth magnet of the electronic device already positioned.

Once alignment and positioning have been carried out, the electric conductors represented, respectively, by the first magnet of the station 10 and by the first and second magnets stacked together, and by the second magnet of the station 10 and the third and fourth magnets stacked together, allow the transfer of electric current coming from the station 10 connected to the electric power supply network to the rechargeable battery of each positioned electronic device.

The transfer of electric current via said electric conductors is obtainable by exploiting the electric conductivity of the magnets in contact with one another.

In this way, it is possible to electrically simultaneously charge the rechargeable batteries of the positioned electronic devices.

As can be seen, the object of the invention is fully achieved.

Indeed, the electronic device 1, the electric charging station, and also the electric charging system provide for the use of magnets, for example neodymium magnets, to perform the dual function of alignment and positioning of the electronic device for electric charging and the actual transfer of electric current from the electric charging station to the rechargeable battery of the electronic device.

Therefore, the configuration of the electronic device and the electric charging station is as simplified as possible, so as to ensure both low manufacturing and maintenance costs and the possibility of achieving a timely and correct electric charging.

The alignment and positioning of the electronic device on the respective electric charging station, or on another electronic device already positioned for electric charging, is rather easy to achieve, and the transfer of electric energy without cables (wirelessly), via magnets, from the electric charging station to the electronic device with rechargeable battery to be charged is kept optimal precisely due to the use of magnets as electric conductors.

Moreover, an improvement in energy efficiency is also evident, deriving mainly from the reduction in the number of cables needed for charging.

Finally, it is reiterated that the system object of the present invention advantageously allows to significantly optimise the space needed to wirelessly charge, but via magnets, the rechargeable batteries of multiple electronic devices simultaneously, for example light diffusers of portable table lamps, ensuring more efficient and compact management, ideal for high-traffic environments such as restaurants, bars, or hotels.

It is noted that the teachings of the present invention can be applied to any rechargeable electronic device, in addition to the already mentioned table lamps or more generally light diffusers, such as, for example, pagers, power banks, audio guides, recessed spotlights, drones, and so on, configurable to be chargeable wirelessly via magnets.

To the embodiments of the electronic device, the electric charging station, and the system described above, a skilled person in the art may make modifications, adaptations, and substitutions of elements with others functionally equivalent, without departing from the scope of the following claims. Each of the features described as belonging to a possible embodiment may be implemented independently of the other described embodiments.

## Claims

1. An electronic device (1) chargeable without cables via magnets, comprising:
- a main body (2) extending longitudinally along a longitudinal extension axis (L), said main body (2) being delimited by a first lower wall (S1) and a second upper wall (S2) joined together by at least one side wall (S3);
- an electronic board (3) housed in said main body (2);
- at least one programmable data processing unit (4) mounted on said electronic board (3);
- a rechargeable battery (5) housed in said main body (2) and operatively connected to said electronic board (3);
- a first magnet (M1) housed in said main body (2) and operatively connected to the electronic board (3), said first magnet (M1) having a respective positive pole (P1) facing the outside of the main body (2) through a first through hole (F1) present on the first lower wall (S1) of the main body (2) and a respective negative pole (N1) facing the inside of the main body (2) and operatively connected to the electronic board (3);
- a second magnet (M2) housed in said main body (2) and operatively connected to the electronic board (3), the second magnet (M2) having a respective negative pole (N2) facing the outside of the main body (2) through a first through hole (F1') present on the second upper wall (S2) of the main body (2) and a respective positive pole (P2) facing the inside of the main body (2) and operatively connected to the electronic board (3),
the first magnet (M1) and the second magnet (M2) being housed in the main body (2) so as to be mutually aligned along the same axis parallel to the longitudinal extension axis (L) of the main body (2) and so that the negative pole (N1) of the first magnet (M1) faces the positive pole (P2) of the second magnet (M2);
- a third magnet (M3) housed in said main body (2) and operatively connected to the electronic board (3), the third magnet (M3) having a respective negative pole (N3) facing the outside of the main body (2) through a second through hole (F2) present on the first lower wall (S1) of the main body (2) and a respective positive pole (P3) facing the inside of the main body (2) and operatively connected to the electronic board (3);
- a fourth magnet (M4) housed in said main body (2) and operatively connected to the electronic board (3), the fourth magnet (M4) having a positive pole (P4) facing the outside of the main body (2) through a second through hole (F2') present on the second upper wall (S2) of the main body (2) and a negative pole (N4) facing the inside of the main body (2) and operatively connected to the electronic board (3),
the third magnet (M3) and the fourth magnet (M4) being housed in the main body (2) so as to be mutually aligned along the same axis parallel to the longitudinal extension axis (L) of the main body (2) and so that the positive pole (P3) of the third magnet (M3) faces the negative pole (N4) of the fourth magnet (M4),
the positive pole (P1) of the first magnet (M1) and the negative pole (N3) of the third magnet (M3) facing the outside of the main body (2) from the first lower wall (S1) being adapted to contact a respective negative pole of a further first magnet and a respective positive pole of a further second magnet, respectively, to allow the rechargeable electronic device (1) to be positioned for the electric charging of the rechargeable battery (5),
the first magnet (M1) and the third magnet (M3), when the rechargeable electronic device (1) is positioned for the electric charging of the rechargeable battery (5), being adapted to receive, from the further first and second magnets on which they are positioned, electric current from an electric charging station (10), connected to an electric power supply network, to electrically charge the rechargeable battery (5).

2. The electronic device (1) according to claim 1, wherein the negative pole (N2) of the second magnet (M2) and the positive pole (P4) of the fourth magnet (M4) are adapted to contact a respective positive pole of a further first magnet and a respective negative pole of a further third magnet, respectively, of a further rechargeable electronic device positionable above the electronic device (1) for the electric charging of a further rechargeable battery of said further rechargeable electronic device, the second magnet (M2) and the fourth magnet (M4), when the rechargeable electronic device (1) is positioned for the electric charging of the rechargeable battery and the further rechargeable electronic device is positioned above the rechargeable electronic device (1), being adapted to transfer, to the further first magnet and the further second magnet of the further rechargeable electronic device, respectively, the electric current received by the first magnet (M1) and the third magnet (M3), respectively, from the electric charging station (10) connected to the electric power supply network.

3. The electronic device (1) according to claim 1 or 2, comprising a light source (S-L) operatively connected to the electronic board (3), the electronic device (1) comprising one or more controls (S-T) operable by a user and operatively connected to the electronic board (3) for controlling the light source (S-L).

4. The electronic device (1) according to claim 3, wherein the main body (2) of the electronic device (1) comprises a transparent or semi-transparent portion (P-T) adapted to promote the passage of the light generated by the light source (S-L) to the outside.

5. The electronic device (1) according to claim 4, wherein the main body (2) comprises an upper portion (P-S) and a lower portion (P-I) fixed to each other, the upper portion (P-S) comprising the second upper wall (S2) and the at least one side wall (S3), the lower portion (P-I) comprising the first lower wall (S1) and the transparent or semi-transparent portion (P-T).

6. The electronic device (1) according to claim 5, wherein the lower portion (P-I) of the main body (2) is shaped to be removably fixable to a support (S-P).

7. The electronic device (1) according to any one of the preceding claims, wherein the first magnet (M1), the second magnet (M2), the third magnet (M3), and the fourth magnet (M4) are neodymium magnets.

8. A station or base (10) for the electric charging without cables via magnets of an electronic device (1) rechargeable without cables via magnets, said electronic device (1) being according to any one of the preceding claims, the station (10) comprising:
- a respective main body (11) extending longitudinally along a respective longitudinal extension axis (L'), said main body (11) being delimited by a first lower wall (P1) and a second upper wall (P2) joined together by at least one side wall (P3);
- a respective electronic board (12) housed in said main body (11);
- a first magnet (MG1) housed in said main body (11) and operatively connected to the electronic board (12), said first magnet (MG1) of the station (10) having a respective negative pole (PN1) facing the outside of the main body (11) through a first through hole (FP1) present on the second upper wall (P2) of the main body (11) and a respective positive pole (PP1) facing the inside of the main body (11) through a first through hole (FP1') present inside the main body (11) and connected to the electronic board (12);
- a second magnet (MG2) housed in said main body (11) and operatively connected to the electronic board (12), said second magnet (M2) having a respective positive pole (PP1') facing the outside of the main body (11) through a second through hole (FP2) present on the second upper wall (P2) of the main body (11) and a respective negative pole (PN1') facing the inside of the main body (11) through a second through hole (FP2') present inside the main body (11) and connected to the electronic board (12);
- an electric power supply cable (C-A) which, at a first end, comprises electric cables connected to the first magnet (MG1) and the second magnet (MG2), and at a second end, comprises an electric plug for connecting the station (10) to an electric power supply network and supplying electric current, by means of a transformer present inside the station (10), to the first magnet (MG1) and the second magnet (MG2) of the station (10),
the negative pole (PN1) of the first magnet (MG1) and the positive pole (PP1') of the second magnet (MG2) facing the outside of the main body (11) of the station (10) from the second upper wall (P2) being adapted to contact a respective positive pole (P1) of a first magnet (M1) and a respective negative pole (N3) of a third magnet (M3), respectively, of the rechargeable electronic device (1) to allow the rechargeable electronic device (1) to be positioned on the electric charging station (10) for the electric charging of a rechargeable battery (5) of the rechargeable electronic device (1),
the first magnet (MG1) and the second magnet (MG2) of the station (10), when the rechargeable electronic device (1) is positioned on the station (10) for the electric charging of the rechargeable battery (5), being adapted to supply, to the first magnet (M1) and the third magnet (M3) of the electronic device (1), the electric current supplied by the electric charging station (10) connected to the electric power supply network to electrically charge the rechargeable battery (5) of the electronic device (1).

9. The electric charging station or base (10) according to claim 8, wherein the main body (11) of the station (10) comprises an upper portion (P-S') and a lower portion (PI'), the upper portion (P-S') comprising the second upper wall (P2) and the at least one side wall (P3), the lower portion (P-I') comprising the first lower wall (P1).

10. The electric charging station or base (10) according to claim 8 or 9, wherein the first magnet (MG1) and the second magnet (MG2) are neodymium magnets.

11. A system (100) for electric charging without cables via magnets one or more rechargeable electronic devices (1) simultaneously, comprising:
- a station (10) for the electric charging via magnets according to any one of the preceding claims from 8 to 10;
- one or more electronic devices (1) chargeable without cables via magnets, each according to any one of the preceding claims 1 to 7,
said one or more electronic devices (1) being alignable and positionable one above the other, along a longitudinal extension axis (L), starting from the electric charging station (10) by means of the magnetic coupling obtainable between the first magnet (MG1) of the charging station (10), the first magnet (M1) and the second magnet (M2) of said one or more electronic devices (1) and by means of the magnetic coupling between the second magnet (MG2) of the electric charging station (10), the third magnet (M3) and the fourth magnet (M4) of said one or more electronic devices (1),
the electronic device (1) positionable in contact with the electric charging station (10) being adapted to receive electric current directly from the station (10), connected to an electric power supply network, via the first magnet (MG1) of the charging station (10), the first magnet (M1) and the second magnet (M2) of said electronic device (1) and via the second magnet (MG2) of the electric charging station (10), the third magnet (M3) and the fourth magnet (M4) of said electronic device (1) being in magnetic contact with each other to form respective electrical conductors between the station (10) and the rechargeable battery (5) of said electronic device (1),
each of the other electronic devices (1), each positionable in contact with the electronic device (1) that precedes it in the vertical stack to be built starting from the station (10), being adapted to receive electric current from the station (10) by means of the electrical conductors represented by the respective first magnet (MG1) of the electric charging station (10), first magnet (M1) and second magnet (M2) of the electronic devices (1), and via the second magnet (MG2) of the electric charging station (10), the third magnet (M3) and the fourth magnet (M4) of the electronic devices (1) in magnetic contact with the station (10) and all the electronic devices (1) that precede it in the vertical stack obtainable starting from the station (10).

12. A lamp (200) comprising:
- an electronic device (1) according to any one of the preceding claims from 3 to 7;
- a support (S-P) of said electronic device (1).

13. The lamp (200) according to claim 12, wherein the support (S-P) is in the shape of a cylinder, hollow at least in the upper part, for receiving and holding a lower portion (P-I) of a main body (2) of the electronic device (1).
